# EUROPEAN PATENT APPLICATION

(11) **EP 3 282 308 A1**
(43) Date of publication of application: **14.02.2018**
(21) Application number: 15834704.7
(22) Date of filing: 16.09.2015
(51) Int. Cl.: G02F 1/133, G09G 3/36

(54) **LIQUID CRYSTAL DISPLAY DEVICE AND CONTROL METHOD THEREFOR**

(30) Priority: 07.04.2015 CN 201510160696
(71) Applicant: BOE Technology Group Co., Ltd., Beijing 100015 (CN); Hefei Boe Display Light Co., Ltd., Hefei, Anhui 230012 (CN)
(72) Inventor: FENG, Qinggang, Beijing 100176 (CN); LIU, Shali, Beijing 100176 (CN)
(74) Representative: Klunker IP Patentanwälte PartG mbB
(86) International application number: PCT/CN2015/089723
(87) International publication number: WO 2016/161769

(57) **Abstract**

A liquid crystal display device and a control method thereof are provided. The liquid crystal display device includes a liquid crystal display unit (23), a position capturing unit (21), a control unit (22) and at least two backlight units (11, 12, 13). The at least two backlight units (11, 12, 13) have different light emergent directions; the position capturing unit is configured to collect position information of a user, and feed the position information back to the control unit (22); the control unit (22) is configured to acquire a viewing angle of the user based on the position information, and control the backlight unit having a light emergent direction matching with the viewing angle to emit light, and meanwhile, adjust a brightness of the liquid crystal display unit (23), so as to make the brightness match with the viewing angle. The liquid crystal display device can ensure no loss of image quality in a liquid crystal display device at different viewing angles.

## Description

### TECHNICAL FIELD

Embodiments of the present invention relate to a liquid crystal display device and a control method thereof.

### BACKGROUND

A traditional liquid crystal display device usually includes a flat backlight source and a liquid crystal display unit. When a viewing angle of a user is relatively large, the liquid crystal display device often has problems of lowered contrast and lowered brightness, resulting in loss of image quality. The problems are mainly caused by two reasons.

Firstly, the viewing angle of the backlight source is limited. Since a practical prism sheet of the backlight source can converge light, when a viewing angle is deflected by about 30°, a brightness of the backlight source may be rapidly reduced to about 1/3 of that under a vertical viewing angle (a viewing angle at which eyes of the user directly face the display screen, and is 0°).

Secondly, since the liquid crystal molecule has an anisotropic property, when a viewing angle of the user is deflected, the contrast of the liquid crystal screen is reduced, so does the brightness.

### SUMMARY

According to at least one embodiment of the present invention, there is provided a liquid crystal display device, comprising a liquid crystal display unit, a position capturing unit, a control unit and at least two backlight units, wherein, the at least two backlight units have different light emergent directions; the position capturing unit is configured to collect position information of a user, and feed the position information back to the control unit; and the control unit is configured to acquire a viewing angle of the user based on the position information, and control the backlight unit having a light emergent direction matching with the viewing angle to emit light.

According to at least one embodiment of the present invention, there is provided a control method of a liquid crystal display device, for controlling the liquid crystal display device described above, and comprising steps of: collecting position information of a user by the position capturing unit; and acquiring a viewing angle of the user based on the position information, and controlling the backlight unit having a light emergent direction matching with the viewing angle to emit light, by the control unit.

### BRIEF DESCRIPTION OF THE DRAWINGS

In order to clearly illustrate the technical solution of the embodiments of the present invention, the drawings of the embodiments will be briefly described in the following; it is obvious that the described drawings are only related to some embodiments of the present invention and thus are not limitative of the present invention.
FIG. 1 is a block diagram of a liquid crystal display device provided by an embodiment of the present invention;
FIG. 2A is a structural schematic diagram of the liquid crystal display device provided by the embodiment of the present invention when a user is in position A;
FIG. 2B is a schematic diagram of a time sequence of voltages used by a control unit and deflections of liquid crystal molecules when the user is in position A;
FIG. 3A is a structural schematic diagram of the liquid crystal display device provided by the embodiment of the present invention when a user is in position B;
FIG. 3B is a schematic diagram of a time sequence of voltages used by a control unit and deflections of liquid crystal molecules when the user is in position B;
FIG. 4A is a structural schematic diagram of the liquid crystal display device provided by the embodiment of the present invention when a user is in position C;
FIG. 4B is a schematic diagram of a time sequence of voltages used by a control unit and deflections of liquid crystal molecules when the user is in position C; and
FIG. 5 is a structural schematic diagram of a liquid crystal display device provided by a variant embodiment of the embodiment of the present invention.

### DETAILED DESCRIPTION

In order to make objects, technical details and advantages of the embodiments of the present invention apparent, the technical solutions of the embodiment will be described in a clearly and fully understandable way in connection with the drawings related to the embodiments of the present invention. It is obvious that the described embodiments are just a part but not all of the embodiments of the present invention. Based on the described embodiments of the present invention, those ordinarily skilled in the art can obtain other embodiment(s), without any inventive work, which should be within the protective scope of the present invention.

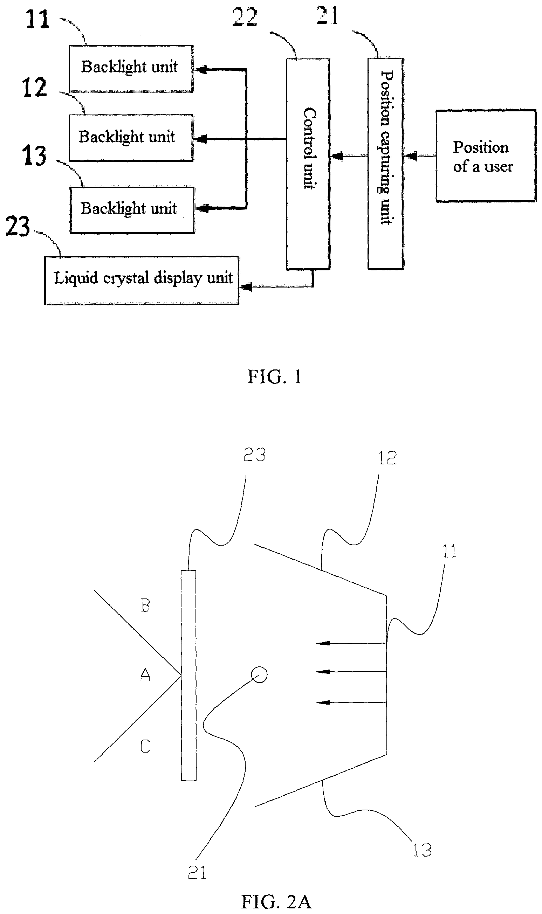

FIG. 1 is a block diagram of a liquid crystal display device provided by an embodiment of the present invention. Please refer to FIG. 1, the liquid crystal display device includes a liquid crystal display unit 23, a position capturing unit 21, a control unit 22 and three backlight units 11-13. The three backlight units 11-13 are used for emitting light, and have different light emergent directions. The different light emergent directions of respective backlight units may be realized by, but not limited to, two manners as follows: in a first manner, the respective backlight units are arranged on a same plane, and backlight sources arranged on the respective backlight units have different light emergent directions; in a second manner, light emergent directions of backlight sources arranged on the respective backlight units are perpendicular to a plane where the respective backlight units are located, and the respective backlight units are deflected by different angles, that is, the respective backlight units are arranged on different planes, thereby realizing that the backlight sources of the respective backlight units have different light emergent directions.

For example, the backlight units 11-13 are arranged on a light incident side of the liquid crystal display unit 23, i.e., an opposite side of a display side. In addition, positional relationships among the liquid crystal display unit 23, the position capturing unit 21 and the control unit 22 are not specifically limited. For example, the liquid crystal display unit 23, the position capturing unit 21 and the control unit 22 may be integrated together.

The position capturing unit 21 is configured to collect position information of a user, and feed the position information back to the control unit 22; the control unit 22 is configured to acquire a viewing angle of the user based on the position information, and control the backlight unit having a light emergent direction corresponding to the viewing angle to emit light, and meanwhile, adjust a brightness of the liquid crystal display unit 23, so as to make the brightness match with the viewing angle.

In some embodiments, a viewing angle of the user corresponding to the light emergent direction of the backlight unit 11 is A; a viewing angle of the user corresponding to the light emergent direction of the backlight unit 12 is B; and a viewing direction of the user corresponding to the light emergent direction of the backlight unit 13 is C. When the viewing angle of the user is A, as illustrated in FIG. 2A, the position capturing unit 21 collects position information of the user, and feeds the position information back to the control unit 22; the control unit 22 acquires a viewing angle A of the user based on the position information, and controls the backlight unit 11 to emit light, and at this moment, the backlight unit 11 directly emits light facing a direction of the viewing angle A (as illustrated by arrows in FIG. 2A); and meanwhile, the control unit 22 adjusts a brightness of the liquid crystal display unit 23, so as to make the brightness match with the viewing angle A, for example, a brightest state of the liquid crystal display unit 23 is adjusted to an angle matching with the viewing angle A.

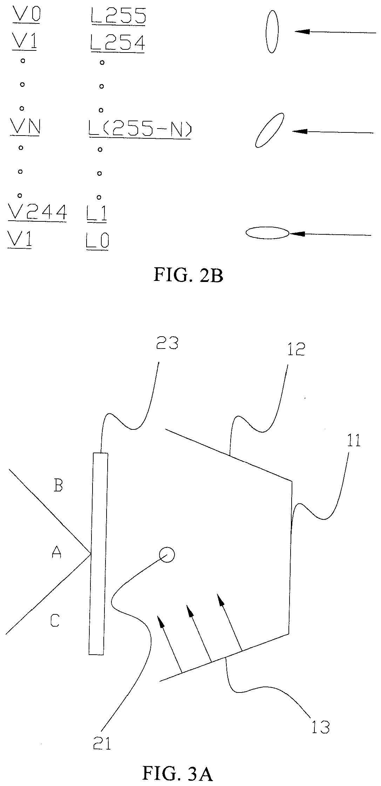

The control unit 22 may use different time sequences of voltages to control liquid crystal molecules in the liquid crystal display unit 23 to deflect by different angles, to adjust a brightness of the liquid crystal display unit 23. Taking an example that the liquid crystal display unit 23 may display 255 grayscales, when the viewing angle of the user is A, a time sequence of voltages used by the control unit 22 is illustrated in a left portion of FIG. 2B; a deflecting process of light (as illustrated by arrows in FIG. 2B) emitted by the liquid crystal molecules in the liquid crystal display unit 23 with respect to the backlight unit 11 is illustrated in a right portion of FIG. 2B. Under the control of the time sequence of voltages, it may be finally realized that the brightest state of the liquid crystal display unit 23 is adjusted to an angle matching with the viewing angle A.

When the viewing angle of the user is B, as illustrated in FIG. 3A, the position capturing unit 21 collects position information of the user, and feeds the position information back to the control unit 22; the control unit 22 acquires a viewing angle B of the user based on the position information, and controls the backlight unit 13 to emit light, and at this moment, the backlight unit 13 directly emits light facing a direction of the viewing angle B (as illustrated by arrows in FIG. 3A); and meanwhile, the control unit 22 adjusts a brightness of the liquid crystal display unit 23, so as to make the brightness match with the viewing angle B, for example, the brightest state of the liquid crystal display unit 23 is switched to an angle matching with the viewing angle B.

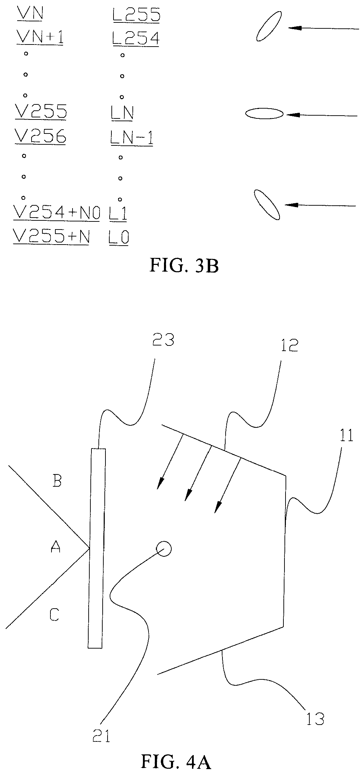

For example, the control unit 22 may use different time sequences of voltages to control liquid crystal molecules in the liquid crystal display unit 23 to deflect by different angles, to adjust a brightness of the liquid crystal display unit 23. Taking an example that the liquid crystal display unit 23 may display 255 grayscales, when the viewing angle of the user is B, a time sequence of voltages used by the control unit 22 is illustrated in a left portion of FIG. 3B; a deflecting process of light (as illustrated by arrows in FIG. 3B) emitted by the liquid crystal molecules in the liquid crystal display unit 23 with respect to the backlight unit 13 is illustrated in a right portion of FIG. 3B. Under the control of the time sequence of voltages, it may be finally realized that the brightest state of the liquid crystal display unit 23 is adjusted to an angle matching with the viewing angle B.

When the viewing angle of the user is C, as illustrated in FIG. 4A, the position capturing unit 21 collects position information of the user, and feeds the position information back to the control unit 22; the control unit 22 acquires a viewing angle C of the user based on the position information, and controls the backlight unit 12 to emit light, and at this moment, the backlight unit 12 directly emits light facing a direction of the viewing angle C (as illustrated by arrows in FIG. 4A); and meanwhile, the control unit 22 adjusts a brightness of the liquid crystal display unit 23, so as to make the brightness match with the viewing angle C, for example, the brightest state of the liquid crystal display unit 23 is adjusted to an angle matching with the viewing angle C.

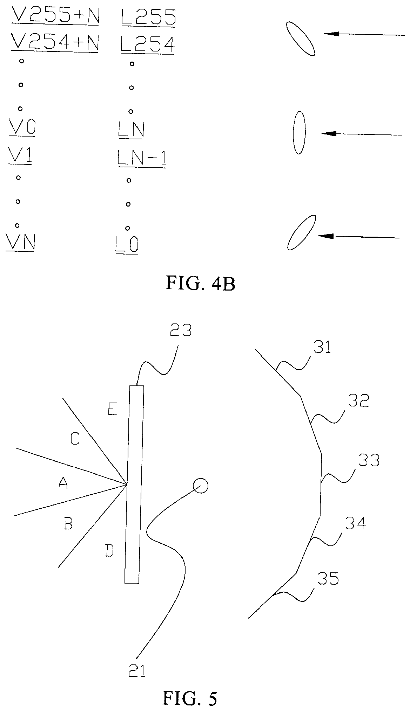

The control unit 22 may use different time sequences of voltages to control liquid crystal molecules in the liquid crystal display unit 23 to deflect by different angles, to adjust a brightness of the liquid crystal display unit 23. Taking an example that the liquid crystal display unit 23 may display 255 grayscales, when the viewing angle of the user is C, a time sequence of voltages used by the control unit 22 is illustrated in a left portion of FIG. 4B; a deflecting process of light (as illustrated by arrows in FIG. 4B) emitted by the liquid crystal molecules in the liquid crystal display unit 23 with respect to the backlight unit 12 is illustrated in a right portion of FIG. 4B. Under the control of the time sequence of voltages, it may be finally realized that the brightest state of the liquid crystal display unit 23 is adjusted to an angle matching with the viewing angle C.

For example, the position capturing unit 21 includes a position collecting part and a signal output part. The position collecting part is configured to collect position information of the user, and send the position information to the signal output part; and the signal output part may be a face recognizing apparatus, for collecting the position information of the user in a manner of face recognizing. Of course, in practical application, other apparatuses which can collect position information of human may be used, too. The signal output part is configured to convert the position information to an electrical signal, and send the electrical signal to the control unit. The control unit performs corresponding analysis and calculation based on the position information, to acquire a viewing angle of the user.

For example, light emergent directions of the respective backlight units converge at a certain point, to facilitate simplifying calculating process of the control unit. In the embodiment, the respective backlight units are arranged on different planes, that is, the respective backlight units have different deflected angles, to realize that the respective backlight units have different light emergent directions but converge at a certain point. However, in practical application, the respective backlight units may be further arranged on a same plane, and light emergent directions of backlight sources arranged on the respective backlight units may converge at a certain point.

In some embodiments, a number of the backlight units may be an odd number, and the backlight units are arranged sequentially; and a backlight unit located in the middle is used as a main backlight unit, a light emergent direction of which is perpendicular to a display screen of the liquid crystal display unit. Since the user mainly uses the liquid crystal display device in a position directly facing a display screen of the liquid crystal display device for most of the time, a backlight unit located in the middle may be used as a main backlight unit, to satisfy the user's normal habits.

As a variant embodiment of the embodiment of the present invention, FIG. 5 is a structural schematic diagram of a liquid crystal display device provided by a variant embodiment of the embodiment of the present invention. Please refer to FIG. 5, the variant embodiment only differs from the embodiment described above in that: the numbers of the backlights are different.

In the embodiment, the number of the backlights is five, 31-35 respectively; the five backlights 31-35 have five light emergent directions, so that the viewing angles of the user may be accordingly divided into five angles, to make the corresponding backlight units directly emit light facing a direction of a viewing angle more accurately, to further reduce loss of image quality in a liquid crystal display device.

Of course, in practical application, the number of the backlight units may be designed to be two, four or more than six according to actual conditions.

In summary, in the liquid crystal display device provided by the embodiment of the present invention, at least two backlight units are arranged, the respective backlight units have different light emergent directions, position information of a user is collected by the position capturing unit, a viewing angle of the user is acquired by the control unit based on the position information, and the backlight unit having a light emergent direction matching with the viewing angle is controlled to emit light, and meanwhile, a brightness of the liquid crystal display unit is adjusted, so as to make the brightness match with the viewing angle, which can ensure no loss of image quality in the liquid crystal display screen at different viewing angles.

As another technical solution, an embodiment of the present invention further provides a control method of a display device; the control method is used for controlling the liquid crystal display device provided by the embodiment of the present invention, and includes steps of:
collecting position information of a user by the position capturing unit; and
acquiring a viewing angle of the user based on the position information, and controlling the backlight unit having a light emergent direction matching with the viewing angle to emit light, and meanwhile, adjusting a brightness of the liquid crystal display unit 23, so as to make the brightness match with the viewing angle, by the control unit.

In practical application, the number of the users may be one, or may be more than two. With respect to the two cases, the number of the users may be acquired by the position capturing unit, and fed back to the control unit. For example, the number of the users may be determined by a face recognizing apparatus. The control unit judges whether the number of the users is more than two, and performs corresponding control actions according to a result of the judgment.

For example, if the number of the users is one, the control unit acquires a viewing angle of the user based on the position information, and controls the backlight unit having a light emergent direction matching with the viewing angle to emit light, and meanwhile, adjusts deflected angles of the liquid crystal molecules, so as to make the brightness match with the viewing angle

If the number of the users is more than two, the control unit acquires viewing angles of the respective users based on the position information and the numbers of the users corresponding to the respective viewing angles, judges whether the numbers of the users corresponding to the respective viewing angles are the same, and performs corresponding control actions based on results of the judgment.

If the numbers of the users corresponding to the respective viewing angles are the same, the control unit has no action, or, selects a group of the users randomly, and the control unit controls a backlight unit having a deflected angle corresponding to the viewing angle of the group of the users to emit light.

If the numbers of the users corresponding to the respective viewing angles are different, the control unit controls the backlight unit having the deflected angle corresponding to the viewing angle of a maximum number of the users to emit light, and meanwhile, adjusts a brightness of the liquid crystal display unit, so as to make the brightness match with the viewing angle. Thus, visual experience of most people may be guaranteed.

The control method of the liquid crystal display device in the embodiment of the present invention is used for controlling the liquid crystal display device provided by the present invention, and can ensure no loss of image quality in a liquid crystal display device at different viewing angles.

The foregoing embodiments merely are exemplary embodiments of the present invention, and not intended to define the scope of the present invention, and the scope of the present invention is determined by the appended claims.

The present application claims priority of Chinese Patent Application No. 201510160696.9 filed on April 7, 2015, the invention of which is incorporated herein by reference in its entirety as part of the present application.

## Claims

1. A liquid crystal display device, comprising a liquid crystal display unit, a position capturing unit, a control unit and at least two backlight units, wherein,
the at least two backlight units have different light emergent directions;
the position capturing unit is configured to collect position information of a user, and feed the position information back to the control unit; and
the control unit is configured to acquire a viewing angle of the user based on the position information, and control the backlight unit having a light emergent direction matching with the viewing angle to emit light.

2. The liquid crystal display device according to claim 1, wherein, the control unit is configured to adjust a brightness of the liquid crystal display unit, so as to make the brightness match with the viewing angle.

3. The liquid crystal display device according to claim 1 or 2, wherein, the position capturing unit includes a position collecting part and a signal output part, wherein,
the position collecting part is configured to collect position information of the user, and send the position information to the signal output part; and
the signal output part is configured to convert the position information to an electrical signal, and send the electrical signal to the control unit.

4. The liquid crystal display device according to claim 3, wherein, the position collecting part includes a face recognizing apparatus, for collecting the position information of the user in a manner of face recognizing.

5. The liquid crystal display device according to any one of claims 1 to 4, wherein, light emergent directions of respective backlight units converge at a certain point.

6. The liquid crystal display device according to any one of claims 1 to 5, wherein, a number of the backlight units is an odd number, the backlight units are arranged sequentially, and a backlight unit located in the middle is used as a main backlight unit, a light emergent direction of which is perpendicular to a display screen of the liquid crystal display unit.

7. The liquid crystal display device according to claim 2, wherein, the control unit is configured to adjust a brightness of the liquid crystal display unit by controlling liquid crystal molecules to rotate by different angles.

8. A control method of a liquid crystal display device, which is used for controlling the liquid crystal display device according to any one of claims 1 to 7, and comprising steps of:
collecting position information of a user by the position capturing unit; and
acquiring a viewing angle of the user based on the position information, and controlling the backlight unit having a light emergent direction matching with the viewing angle to emit light, by the control unit.

9. The control method of the liquid crystal display device according to claim 8, further comprising a step of: adjusting a brightness of the liquid crystal display unit by the control unit, so as to make the brightness match with the viewing angle.

10. The control method of the liquid crystal display device according to claim 8 or 9, further comprising steps of: collecting a number of the users and feeding the number back to the control unit by the position capturing unit; and
judging the number of the users by the control unit.

11. The control method of the liquid crystal display device according to claim 10, wherein, in a case that the number of the users is one, the control unit acquires a viewing angle of the user based on the position information, and controls the backlight unit having the light emergent direction matching with the viewing angle to emit light, and meanwhile, adjusts deflected angles of liquid crystal molecules in the liquid crystal unit, so as to make the deflected angles match with the viewing angle.

12. The control method of the liquid crystal display device according to claim 10, wherein, in a case that the number of the users is more than two, the control unit acquires viewing angles of respective users based on the position information and the numbers of the users corresponding to respective viewing angles, and judges whether the numbers of the users corresponding to the respective viewing angles are the same.

13. The control method of the liquid crystal display device according to claim 12, wherein, in a case that the numbers of the users corresponding to the respective viewing angles are the same, the control unit has no action, or, selects a group of the users randomly, and the control unit controls a backlight unit having a deflected angle corresponding to the viewing angle of the group of the users to emit light.

14. The control method of the liquid crystal display device according to claim 12, wherein, in a case that the numbers of the users corresponding to the respective viewing angles are different, the control unit controls the backlight unit having the deflected angle corresponding to the viewing angle of a maximum number of the users to emit light, and meanwhile, adjusts a brightness of the liquid crystal display unit, so as to make the brightness match with the viewing angle.

15. The control method of the liquid crystal display device according to claim 9, wherein, a brightness of the liquid crystal display unit is adjusted by controlling liquid crystal molecules to rotate by different angles.
